(19) Europäisches Patentamt
European Patent Office
Office européen des brevets

(11) **EP 3 626 678 B1**

(12) **EUROPÄISCHE PATENTSCHRIFT**

(45) Veröffentlichungstag und Bekanntmachung des Hinweises auf die Patenterteilung:
**20.05.2026 Patentblatt 2026/21**

(21) Anmeldenummer: **19197198.5**

(22) Anmeldetag: **13.09.2019**

(51) Internationale Patentklassifikation (IPC):
*C01B 32/00* (2017.01)   *H01M 4/136* (2010.01)
*H01M 4/1397* (2010.01)   *H01M 4/38* (2006.01)
*H01M 4/62* (2006.01)   *H01M 4/133* (2010.01)
*H01M 4/134* (2010.01)   *H01M 4/58* (2010.01)
*C01B 32/05* (2017.01)   *H01M 10/052* (2010.01)

(52) Gemeinsame Patentklassifikation (CPC):
**C01B 32/00; C01B 32/05; H01M 4/133; H01M 4/134; H01M 4/136; H01M 4/1397; H01M 4/38; H01M 4/381; H01M 4/382; H01M 4/5815; H01M 4/625;** C08J 2205/026; H01M 10/052; Y02E 60/10

(54) **ELASTISCH VERFORMBARE KOHLENSTOFFAEROGELE ALS MATRIXMATERIAL IN SCHWEFELELEKTRODEN**

ELASTICALLY DEFORMABLE CARBON AEROGELS AS MATRIX MATERIAL IN SULFUR ELECTRODES

AÉROGELS DE CARBONE DÉFORMABLES ÉLASTIQUEMENT EN TANT QUE MATIÈRE MATRICIELLE D'ÉLECTRODES DE SOUFRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.09.2018 DE 102018123285**

(43) Veröffentlichungstag der Anmeldung:
**25.03.2020 Patentblatt 2020/13**

(73) Patentinhaber: **Deutsches Zentrum für Luft- und Raumfahrt e.V.**
**51147 Köln (DE)**

(72) Erfinder:
• **Milow, Barbara**
**50354 Hürth (DE)**
• **Schwan, Marina**
**51375 Leverkusen (DE)**
• **Wagner, Norbert**
**86368 Gersthofen (DE)**
• **Warth, Frieder**
**91235 Hartenstein (DE)**

(74) Vertreter: **dompatent**
**Partnerschaft von Patentanwälten und Rechtsanwälten mbB**
**Deichmannhaus am Dom**
**Bahnhofsvorplatz 1**
**50667 Köln (DE)**

(56) Entgegenhaltungen:
**DE-A1- 102012 218 548      US-A1- 2018 183 067**

• **LI ZIHAO ET AL: "Sulfur loaded in micropore-rich carbon aerogel as cathode of lithium-sulfur battery with improved cyclic stability",** JOURNAL OF POWER SOURCES, ELSEVIER SA, CH, vol. 334, 7 October 2016 (2016-10-07), pages 23 - 30, XP029803839, ISSN: 0378-7753, DOI: 10.1016/J.JPOWSOUR.2016.10.003

**Beschreibung**

Die vorliegende Erfindung betrifft eine Elektrode für einen Akkumulator, umfassend eine aktive Masse (AM), bestehend aus Schwefel und einem Kohlenstoffmatrixmaterial in Form eines elastisch verformbaren mikroporösen Kohlenstoffaerogels, insbesondere zum Einsatz in einem Metall (z.B. Lithium, Magnesium, Aluminium)-Schwefel-Akkumulator, entsprechende verbesserte Akkumulatoren, ein Verfahren zur Herstellung der erfindungsgemäßen Elektrode, sowie die Verwendung von elastisch verformbaren mikroporösen Kohlenstoffaerogelen als Matrixmaterial für eine Elektrode, insbesondere eine Schwefelelektrode.

Um dem zunehmenden Bedarf an Technologien zur Energiespeicherung gerecht zu werden, besteht verstärktes Interesse an neuartigen Akkumulatoren und hierbei insbesondere an solchen, die Schwefelelektroden verwenden. Eine Lithium-Schwefel (Li-S) Batterie wurde erstmals 1962 von Herbert und Ulan patentiert (US 3,043,896). Nahezu uneingeschränkte Verfügbarkeit von Schwefel und die hohe spezifische Kapazität der Li-S-Zelle von 1672 mAh/g(Schwefel) machen gerade Lithium-Schwefel-Akkumulatoren sehr attraktiv. Nichtsdestotrotz wird diese Kapazität in der realen Anwendung, wie zum Beispiel *electric vehicle,* nicht erreicht, da je nach Design der Schwefelelektrode zusätzliche Additive (Leitadditive, Binder und dergleichen) verwendet werden müssen. Die Kapazität der Zelle muss dabei auf die jeweilige spezifische Kapazität der Gesamtzelle bezogen werden, was in deutlich niedrigeren Kapazitäten resultiert. Zur Verbesserung der spezifischen Kapazität gilt es deswegen, den Anteil der Passivmaterialien in der Schwefelelektrode zu reduzieren und den Anteil des Aktivmaterials Schwefel zu maximieren. Eine besondere Schwierigkeit ist hierbei, dass Schwefel trotz seiner isolierenden Natur in eine elektrisch leitfähige Matrix eingebettet werden muss.

Der Anteil der Passivmaterialien, wie Leitadditive, kann durch die Infiltration des Schwefels in leitfähige Matrizen reduziert werden. Für leitfähige Matrizen ist im Stand der Technik hierbei insbesondere der Einsatz von porösen Kohlenstoffmaterialien beschrieben.

DE 199 38 822 A1 beschreibt ein Verfahren zur Herstellung einer Lithiumionen-Interkalationselektrode aus offenporigen monolithischen Kohlenstoffen, vorzugsweise Kohlenstoffaerogelen, wobei auf der Oberfläche eines Skelettmaterials eine Kohlenstoffschicht bei Temperaturen zwischen 500 und 2000 °C abgeschieden wird.

EP 1 610 404 B1 offenbart ein elektrochemisches Element aus flüssigem Material, umfassend eine Metallanode und eine Kathode auf der Basis von Kohlenstoff, wobei die Kathode ein Kohlenstoffaerogel umfasst.

Aus EP 2 250 692 B1 ist ein Material, umfassend Kohlenstoff und Schwefel, sowie eine aus diesem Material gebildete Elektrode bekannt. Der Kohlenstoff liegt in Form einer porösen Matrix mit einer Nanoporosität in Form von Nanoporen und Nanokanälen mit einem durchschnittlichen Durchmesser zwischen 1 und 50 nm vor, wobei der Schwefel in Form von Nanopartikeln in der Nanoporosität positioniert ist.

FR 2 872 347 A beschreibt eine galvanische Zelle, die eine metallische Anode sowie eine Kathode auf Kohlenstoffbasis umfasst, wobei die Kohlenstoffkathode ein Kohlenstoffaerogel umfasst.

Ein Herstellungsverfahren für Kohlenstoffaerogele hat erstmals Richard Pekala 1990 beschrieben (Pekala RW, Alviso CT, LeMay JD. Organic aerogels: microstructural dependence of mechanical properties in compression. J Non-Cryst Solids. 1990;125:67-75. Doi:http://dx.doi.org/10.1016/0022-3093(90)90324-F). Danach können Kohlenstoffaerogele aus organischen Aerogelen, wie beispielsweise Resorcin-Formaldehyd-, Melamin-Formaldehyd-, Phenol-Formaldehyd-Aerogelen und dergleichen, durch Karbonisierung gewonnen werden.

In US 2018/0183067A1 wird ein Verfahren zur Herstellung einer seilförmigen Alkalimetallbatterie bereitgestellt, umfassend: (a) Bereitstellen einer ersten Elektrode, umfassend einen leitfähigen porösen Stab und eine Mischung aus einem aktiven Material der ersten Elektrode und einem ersten Elektrolyten, der in den Poren des ersten porösen Stabs liegt; (b) Bereitstellen eines porösen Separators, der die erste Elektrode umhüllt, um eine separatorgeschützte erste Elektrode zu bilden; (c) Bereitstellen einer zweiten Elektrode umfassend einen leitfähigen porösen Stab mit einer Mischung aus einem aktiven Material der zweiten Elektrode und einem zweiten Elektrolyten, der sich in den Poren des zweiten porösen Stabes befindet; (d) Kombinieren der durch einen Separator geschützten ersten Elektrode und der zweiten Elektrode, um ein Geflecht oder einen Faden mit einer Drall- oder Spiralelektrode zu bilden; und (e) Umwickeln oder Umhüllen des Geflechts oder Garns mit einer Schutzhülle oder -hülle, um die Seilbatterie zu bilden.

DE 102012 218 548 A1 beschreibt ein Resorcin-Formaldehyd enthaltendes Aerogel. Das Aerogel ist zumindest teilweise elastisch verformbar. Unabhängige Ansprüche sind auch enthalten für: (1) ein Kohlenstoff-Aerogel, das durch Pyrolyse des Aerogels erhalten wird; und (2) Herstellen des Aerogels, umfassend (i) Herstellen einer Lösung, die destilliertes Wasser, Resorcin, Formaldehyd und Natriumcarbonat enthält, (ii) Einstellen des pH-Werts der Lösung auf 5,3-5,6, (iii) Gelieren bei einer Temperatur von 70- 90 ° C, (iv) Abkühlen des Gels auf Raumtemperatur und Waschen mit einem aprotischen organischen Lösungsmittel, (v) Trocknen des Gels bei erhöhter Temperatur, wobei der Formaldehyd in einem stöchiometrischen Überschuss in Bezug auf Resorcin vorliegt, und Das Stoffmengenverhältnis von Resorcin und Wasser beträgt 0,006-0,01.

Der Mengenanteil des Schwefels in der Schwefelelektrode kann durch Steigerung des Porenvolumens des eingesetzten Matrixmaterials erhöht werden. Ist ein großes Porenvolumen vorhanden, kann viel Aktivmaterial (Schwefel) infiltriert werden. Dabei spielen nicht nur Porenvolumina, sondern auch Porengröße und Porengrößenverteilungen eine entscheidende Rolle. Kohlenstoffaerogele sind nicht nur aufgrund ihrer hohen elektrischen Leitfähigkeit besonders geeignete Materialien, sondern vor allem aufgrund ihrer hohen Porosität (bis zu 99 Vol. %), großen spezifischen Oberflächen (500 bis 3500 m$^2$/g) sowie des großen Porenvolumens (2 bis 3 cm$^3$/g). Die Porengrößen lassen sich sowohl während der Synthese, als auch beim Karbonisieren gezielt einstellen. Kohlenstoffaerogele können bekanntermaßen mit mono-, bi- und/oder multimodalen Porengrößenverteilungen hergestellt werden.

Eine besondere Herausforderung für den Einsatz von Schwefelelektroden mit porösen Kohlenstoffmaterialien in Akkumulatoren stellt der sogenannte Polysulfidshuttle dar. Dieser Vorgang findet bei Entladung der Zelle statt, bei der Polysulfide als Zwischenprodukte gebildet werden. Diese Zwischenprodukte weisen eine sehr gute Löslichkeit im Elektrolyten auf. Insbesondere ist die Löslichkeit der langkettigen Polysulfide sehr gut ausgeprägt und führt zum Polysulfidshuttle. Der Polysulfidshuttle beschreibt die Diffusion von Polysulfiden zwischen Kathode und Anode. Dieser Mechanismus führt dazu, dass das für die Energiespeicherung benötigte Aktivmaterial (Schwefel) den Kathodenraum verlässt. Außerdem reagiert der Schwefel anschließend an der Anode, beispielsweise an der metallischen Lithium-Anode zu $Li_2S$ ab. Die Anode wird durch die Ausbildung einer passivierenden Schicht verbraucht. Durch diese Vorgänge sinkt die Kapazität des Li-S-Akkumulators, da die Ladereaktion durch die passivierende Schicht gehemmt wird und der Schwefel irreversibel die Kathode verlässt.

Eine weitere Herausforderung in der Lithium-Schwefel-Zelle stellt die Änderung der Dichte des Schwefels innerhalb der Kathode dar. Der zu Beginn vorliegende Schwefel in Form von $\alpha$-$S_8$ besitzt eine Dichte von 2,06 g/cm$^3$. Das finale Entladeprodukt $Li_2S$ hat aber eine Dichte von 1,66 g/cm$^3$. Dieser Dichteunterschied ruft eine Volumenausdehnung von 80% beim Entladen der Zelle hervor und führt zu einer zusätzlichen mechanischen Belastung in der Zelle. Diese Belastung hat aufgrund der Mikrorissbildung innerhalb der Kathode eine Degradation der Lithium-Schwefel Zelle zur Folge.

Der vorliegenden Erfindung liegt somit die Aufgabenstellung zugrunde, eine Schwefelelektrode für Akkumulatoren, insbesondere für Lithium-Schwefel-Akkumulatoren, bereitzustellen, die die oben beschriebenen Nachteile aus dem Stand der Technik vermeidet. Insbesondere die spezifische Kapazität soll durch eine möglichst dauerhafte Erhöhung des Schwefelanteils der Elektrode verbessert werden. Zudem soll insbesondere die Zyklenstabilität durch Vermeidung beziehungsweise Verringerung des Polysulfidshuttles sowie Vermeidung/Verringerung der Mikrorissbildung infolge der Volumenausdehnung in der Elektrode verbessert werden.

Diese Aufgabenstellung wird in einer ersten Ausführungsform gelöst durch eine Elektrode für einen Lithium-Schwefel-Akkumulator, umfassend Schwefel und ein poröses Kohlenstoffmaterial, wobei die Poren des porösen Kohlenstoffmaterials mit dem Schwefel infiltriert sind, dadurch gekennzeichnet, dass das poröse Kohlenstoffmaterial ein elastisch verformbares mikroporöses Kohlenstoffaerogel umfasst, gemäß dem unabhängigen Anspruch 1.

Erfindungsgemäß besteht das poröse Kohlenstoffmaterial aus dem elastisch verformbaren mikroporösen Kohlenstoffaerogel.

Die erfindungsgemäße Elektrode unterscheidet sich vom Stand der Technik damit insbesondere darin, dass als Matrixmaterial ein (flexibles) Kohlenstoffmaterial zum Einsatz kommt, das überwiegend Mikroporen (kleiner 2 nm) aufweist und zudem elastisch verformbar ist.

Ein erfindungsgemäß einsetzbares Kohlenstoffaerogel ist insbesondere in DE 10 2012 218 548 A1 beschrieben, ohne dass die vorliegende Erfindung auf das dort offenbarte Material beschränkt wäre.

Überraschenderweise hat sich gezeigt, dass durch den Einsatz eines elastisch verformbaren mikroporösen Kohlenstoffaerogels sowohl der Anteil des Aktivmaterials Schwefel und damit die spezifische Kapazität des Akkumulators erhöht werden kann, als auch der sogenannte Polysulfidshuttle unterdrückt werden kann. Überraschenderweise hat sich zudem gezeigt, dass die Mikrorissbildung aufgrund der Volumenausdehnung während der Entladung der Zelle verringert werden kann, indem ein elastisch verformbares mikroporöses Kohlenstoffaerogel als Matrix eingesetzt wird.

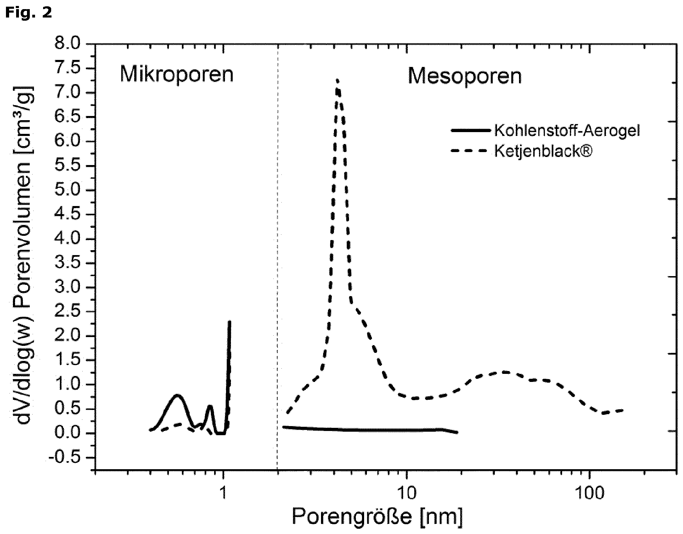

Fig. 2 zeigt beispielhaft die Porengrößenverteilung für ein erfindungsgemäß eingesetztes Kohlenstoffaerogel und ein im Stand der Technik eingesetztes Aktivkohle-Material (Ketjenblack ®) ermittelt mit Hilfe von Barrett-Joyner-Halenda-Methode (BJH) und Dichtefunktionaltheorie (DFT). Die Porengrößenverteilung für Mesoporen (2 bis 50 nm) und Makroporen im Bereich von 50 bis 110 nm wurde basierend auf BJH-Methode mithilfe von Kelvin Gleichung errechnet. Für die Bestimmung der Porengrößenverteilung im Bereich von 0,4 bis 2 nm wurde das DFT-Modell eingesetzt (Groen JC, Peffer LAA, Pérez-Ramírez J. Pore size determination in modified micro- and mesoporous materials. Pitfalls and limitations in gas adsorption data analysis. Microporous Mesoporous Mater. 2003; 60:1-17. Doi:https://doi.org/10.1016/S1387-1811(03)00339-1; IUPAC Technical Report Matthias Thommes*, Katsumi Kaneko, Alexander V. Neimark, James P. Olivier, Francisco Rodriguez-Reinoso, Jean Rouquerol and Kenneth S.W. Sing Physisorption of gases, with special reference to the evaluation of surface area and pore size distribution (IUPAC Technical Report) Pure Appl. Chem. 2015).

Das hier beschriebene Aerogel besitzt eine überwiegend mikroporöse Struktur. Diese Struktur ermöglicht eine Unterdrückung des Polysulfidshuttles, da der Kontakt zwischen Schwefel und Elektrolyt aufgrund der Mikroporosität deutlich reduziert wird. Im Gegenteil dazu besteht die Struktur des im Stand der Technik eingesetzten Aktivkohle-Materials (Ketjenblack ®, EC 600-JD der Firma Akzonobel) überwiegend aus Mesoporen (Poren im Bereich 2 bis 100 nm). Bei solchen Strukturen kann der Kontakt von Schwefel mit Elektrolyten nicht vermieden werden.

| Eigenschaften (Analysemethode) | Ketjenblack® | Kohlenstoff-Aerogel |
|---|---|---|
| Mesoporenvolumen (BJH), $cm^3/g$ | 2,34 | 0,04 |
| Mikroporenvolumen (t-plot), $cm^3/g$ | 0,02 | 0,18 |
| Mikroporenfläche (t-plot), $m^2/g$ | 18 | 464 |
| Externe Oberfläche (t-plot), $m^2/g$ | 1317 | 97 |
| Spezifische Oberfläche (BET), $m^2/g$ | 1335 | 561 |
| Skelettale Dichte (He-Pyknometrie), $g/cm^3$ | 2,5 | 2,4 |
| Umhüllende Dichte (Pyknometrie), $g/cm^3$ | - | 0,04 |
| Porosität, % | - | 98 |

Außerdem hat das erfindungsgemäß eingesetzte Kohlenstoffaerogel ein großes Mikroporenvolumen von beispielsweise 0,18 $cm^3/g$, während ein vergleichbares Material (Ruß) aus dem Stand der Technik (Ketjenblack ®) lediglich ein Mikroporenvolumen von 0,02 $cm^3/g$ aufweist. Das Mikroporenvolumen des Kohlenstoffaerogels ermöglicht eine Erhöhung des Schwefelgehaltes an der Kathode, was zur Erhöhung der Kapazität führt.

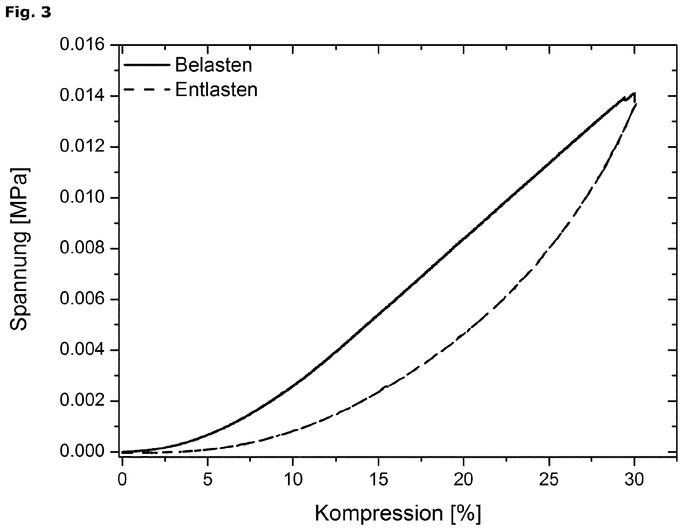

Fig. 3 zeigt beispielhaft eine Kompressions-Entlastungs-Kurve eines erfindungsgemäß eingesetzten Kohlenstoffaerogels. Aufgrund der Elastizität kann das Kohlestoffaerogel die Volumenausdehnung der Kathode kompensieren. Die Elastizität vermindert oder gar verhindert die Bildung von Mikrorissen in der Matrix und verhindert somit die Degradation der Zelle und den damit verbundenen Verlust der Kapazität.

Das erfindungsgemäß eingesetzte Kohlenstoffaerogel ist elastisch verformbar. Flexibilität oder elastische Verformbarkeit ist die Eigenschaft eines Körpers, nach einer Verformung wieder in den ursprünglichen Zustand zurückzukehren, sobald die verformende Kraft nicht mehr wirkt. Beträgt die elastische Verformbarkeit beispielsweise 25%, bedeutet es, dass das um 25% einaxial komprimierte Material nach Entfernen der Kraft vollständig in den Ausgangszustand zurückkehrt. Für diese Erfindung soll die elastische Verformbarkeit vorzugsweise einen Wert von mindestens 10 % aufweisen. Besonders bevorzugt ist eine elastische Verformbarkeit von mindestens 15%. Ganz besonders bevorzugt weist das Kohlenstoffaerogel eine elastische Verformbarkeit von mindestens 25% auf. Die elastische Verformbarkeit beträgt vorzugsweise nicht mehr als 30%.

Das erfindungsgemäß eingesetzte Kohlenstoffaerogel weist vorzugsweise eine spezifische Oberfläche in einem Bereich von 400 bis 2000 $m^2/g$ auf. Besonders bevorzugt ist eine spezifische Oberfläche in einem Bereich von 400 bis 1500 $m^2/g$, insbesondere 500 bis 700 $m^2/g$.

Erfindungsgemäß sind mindestens 50% der Gesamtoberfläche des erfindungsgemäßen Kohlenstoffaerogels durch Poren mit einem Durchmesser von 2 nm oder weniger gebildet. Besonders bevorzugt beträgt der Anteil mindestens 75%, ganz besonders bevorzugt mindestens 85%. Der Anteil kann insbesondere bis zu 98%, bevorzugt 99%, besonders bevorzugt bis zu 100% betragen.

Erfindungsgemäß weist das Kohlenstoffaeorgel eine mikroporöse Struktur auf, wobei überwiegend Poren mit einem Durchmesser von weniger als 2 nm vorliegen. Das Volumen der Poren mit einem Durchmesser von weniger als 2 nm beträgt vorzugsweise 0,1 bis 3 $cm^3/g$, besonders bevorzugt 0,2 bis 3 $cm^3/g$, ganz besonders bevorzugt 0,3 bis 2 $cm^3/g$. Bei zu niedrigem Porenvolumen steht zu wenig Platz für Aktivmaterial zur Verfügung, was die Kapazität des Akkumulators herabsetzt. Ein hohes Porenvolumen kann positiv die Leistung des Akkumulators beeinflussen.

Der Porenraum des Kohlenstoffaerogels ist weitgehend mit Schwefel infiltriert. Zum Einsatz in einem Akkumulator liegt der Schwefel vorzugsweise in Form von elementarem Schwefel und/oder in Form einer Schwefelverbindung vor. Bekannte Schwefelverbindungen umfassen neben $Li_2S$ beispielsweise $Li_2S_6$. Wird die Elektrode in einem Lithium-Schwefel-Akkumulator eingesetzt, liegt der Schwefel in einem vollgeladenen Akkumulator vorzugsweise in Form von elementarem Schwefel und in Form von Lithiumsulfid ($Li_2S$) in einem vollentladenen Akkumulator vor. Dazwischen kommt Schwefel in Form von Polysulfiden $Li_2S_x$ ($2 \leq x \leq 8$), je nach Ladezustand des Akkumulators vor. Die vereinfachten Reaktionsgleichungen während des Lade-/-Entladevorgangs sind in den folgenden Gleichungen gegeben:

Anode:

$$2Li \rightleftharpoons 2Li^+ + 2e^-$$

Kathode:

$$S_8 + 2e^- \rightleftharpoons S_8^{2-}$$

$$3/2\ S_8^{2-} + e^- \rightleftharpoons 2S_6^{2-}$$

$$S_6^{2-} + e^- \rightleftharpoons 3/2\ S_4^{2-}$$

$$1/2\ S_4^{2-} + e^- \rightleftharpoons S_2^{2-}$$

$$1/2\ S_2^{2-} + e^- \rightleftharpoons S^{2-}$$

$$2Li^+ + S^{2-} \rightleftharpoons Li_2S$$

(Endprodukt während der Entladung)

Das Gesamtporenvolumen des Kohlenstoffaerogels ist vorzugsweise zu mindestens 65 Vol.-% mit Schwefel infiltriert. Besonders bevorzugt ist das Porenvolumen zu mindestens 85 Vol.-%, ganz besonders bevorzugt zu mindestens 88 Vol.-%, mit Schwefel infiltriert. Vorzugsweise ist das Gesamtporenvolumen zu nicht mehr als 90 Vol.-% mit Schwefel infiltriert.

Der Schwefelgehalt des Aktivmaterials in der Elektrode beträgt vorzugsweise mindestens 30 Gew.%, besonders bevorzugt mindestens 70 Gew.-%, ganz besonders bevorzugt mindestens 80 Gew.-%. Vorzugsweise beträgt der Schwefelgehalt des Aktivmaterials nicht mehr als 90 Gew.-%. Bei einem zu niedrigen Schwefelgehalt fällt die Energiedichte, bei zu hohem Schwefelgehalt ist die elektrische Leitfähigkeit zu gering.

In einer alternativen Ausführungsform wird die der Erfindung zugrundeliegende Aufgabenstellung gelöst durch einen Akkumulator, umfassend eine erfindungsgemäße Schwefelelektrode, einen Separator, einen Elektrolyten sowie eine weitere Elektrode. Die beiden Elektroden sind von dem Elektrolyten umgeben. Der Separator trennt den Elektrolytraum in zwei getrennte Räume und verhindert einen direkten Stromfluss zwischen den Elektroden durch den Elektrolyten.

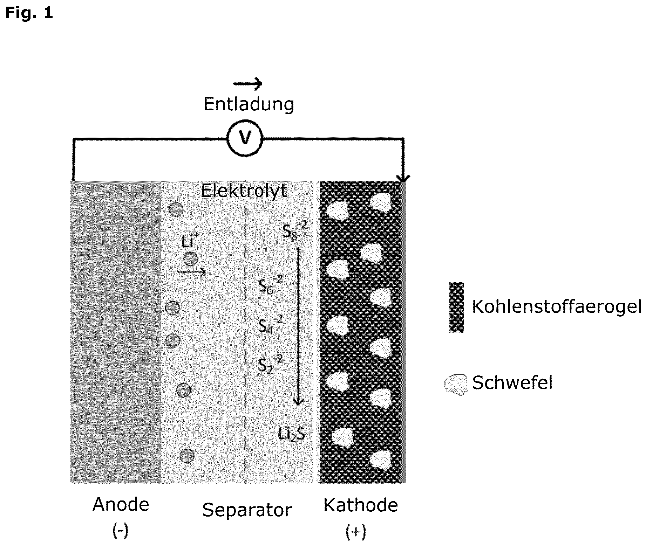

Bei der weiteren Elektrode kann es sich insbesondere um eine an sich bekannte Lithiumelektrode handeln, sodass es sich bei dem erfindungsgemäßen Akkumulator um einen Lithium-Schwefel-Akkumulator handelt. In Fig. 1 ist der Aufbau und die Funktionsweise eines erfindungsgemäßen Lithium-Schwefel-Akkumulators beispielhaft dargestellt.

Die weitere Elektrode (Anode) kann alternativ auch eine Mg, Al, Si, Sn und deren Legierungen Elektrode umfassen.

Der Elektrolyt kann beispielsweise ein Lösungsmittel und darin gelöste Elektrolytverbindungen umfassen. Die Elektrolytverbindungen können beispielsweise Lithium-bis(trifluoromethansulfonyl)imid, Lithiumhexafluorophosphat (LiPF6), oder deren Mischungen umfassen. Als Lösungsmittel können beispielsweise Ethylenglykoldimethylether, 1,3-Dioxolan, Ethylencarbonat (EC), Dimethylcarbonat (DEC), Fluorethylencarbonat (FEC), Dimethylcarbonat (DMC), und deren Mischungen zum Einsatz kommen.

Als Separatormaterial kann beispielsweise Polypropylen, Polyethylen oder ein Glasfaservlies zum Einsatz kommen. Diese Separatoren können entweder ein- oder mehrlagig oder auch beschichtet eingesetzt werden.

In einer weiteren alternativen Ausführungsform wird die erfindungsgemäße Aufgabenstellung gelöst durch ein Verfahren zur Herstellung einer erfindungsgemäßen Schwefelelektrode, umfassend die folgenden Schritte

i) Bereitstellen eines elastisch verformbaren mikroporösen Kohlenstoffaerogels und elementaren Schwefels,
ii) Vermischen und Vermahlen des Kohlenstoffaerogels mit dem Schwefel,
iii) Infiltrieren der Mikroporen des Kohlenstoffaerogels durch den Schwefel, insbesondere mittels Gasphaseninfiltration, wobei das Schwefel-Aerogel-Gemisch unter Vakuum erhitzt wird,
iv) Vermischen des mit Schwefel infiltrierten Aerogels mit einer Bindersuspension und
v) Aufbringen der erhaltenen Suspension auf ein Trägermaterial (Stromableiter) insbesondere auf eine Folie, beispielsweise eine Aluminiumfolie.

In einem ersten Schritt wird ein elastisch verformbares mikroporöses Kohlenstoffaerogel bereitgestellt, welches die oben definierten Eigenschaften aufweist und in der erfindungsgemäßen Schwefelelektrode eingesetzt werden kann. Hierzu kann jedes geeignete Verfahren zur Aerogelsynthese eingesetzt werden. Ein erfindungsgemäßes Kohlenstoffaerogel wird vorzugsweise durch Pyrolyse eines organischen Aerogels mit der entsprechenden Porosität und den entsprechenden elastischen Eigenschaften hergestellt. Insbesondere handelt es sich bei dem organischen Aerogel um ein Aerogel auf Basis von Resorcin-Formaldehyd.

Die Karbonisierung zur Herstellung des Aerogels kann beispielsweise unter Argonatmosphäre bei einer Temperatur von mindestens 900 °C, vorzugsweise 950 °C, und bis zu 1000 °C durchgeführt werden. Vorzugsweise beträgt die Temperatur 1000 °C. Temperaturen oberhalb von 1000°C führen zu einer hohen Schrumpfung und Reduktion des Porenvolumens. Temperaturen unterhalb von 900°C führen zu einer nicht vollständigen Karbonisierung. Die Karbonisierung erfolgt vorzugsweise innerhalb einer Stunde. Bei Bedarf kann das durch Karbonisierung erhaltenen Kohlenstoffaerogel mit $CO_2$ geätzt werden, um das Porenvolumen zu vergrößern.

Ein geeignetes organisches Aerogel als Ausgangsmaterial für das durch Pyrolyse erhaltene Kohlenstoffaerogel ist beispielsweise in DE 10 2012 218 548 A1 beschrieben, auf die insoweit vollinhaltlich Bezug genommen wird. In einer bevorzugten Ausführungsform wird zur Pyrolyse ein elastisch verformbares mikroporöses organisches Aerogel auf Basis von Resorcin-Formaldehyd eingesetzt, das erhältlich ist nach einem Verfahren, umfassend die Schritte:

i) Ansetzen einer Lösung enthaltend destilliertes Wasser, Resorcin, Formaldehyd und einer Base, insbesondere Natriumcarbonat, wobei Formaldehyd in Bezug auf Resorcin im stöchiometrischen Überschuss vorliegt und das Stoffmengenverhältnis von Resorcin und Wasser in einem Bereich von 0,006 bis 0,01 liegt,
ii) Einstellen des pH-Wertes der Lösung auf einen Bereich von 5,3 bis 5,6,
iii) Gelation bei einer Temperatur von 70 bis 90 °C,
iv) Abkühlen des Gels auf Raumtemperatur und Waschen mit einem aprotischen, organischen Lösungsmittel und
v) Trocknen des Gels bei einer gegenüber Raumtemperatur erhöhten Temperatur.

Bevorzugte Ausführungsformen eines solchen organischen elastisch verformbaren organischen Aerogels auf Basis von Resorcin-Formaldehyd als Ausgangspunkt der Pyrolyse zu einem erfindungsgemäß eingesetzten Kohlenstoffaerogel sind im Stand der Technik bekannt und insbesondere in DE 10 2012 218 548 A1 beschrieben.

Das so bereitgestellte Kohlenstoffaerogel wird mit elementarem Schwefel beispielsweise in einer Kugelmühle beim Vermischen vermahlen. Das Massenverhältnis von Kohlenstoffaerogel zu Schwefel liegt in einem Bereich von 10:90 bis 70:30, vorzugsweise in einem Bereich von 10:90 bis 30:70, besonders bevorzugt in einem Bereich von 10:90 bis 20:80. Insbesondere kann das Massenverhältnis 44:56 betragen. Bei einem niedrigen Schwefelgehalt sinkt die Speicherkapazität des Akkumulators und bei einem zu hohen Schwefelgehalt steigt der elektrische Widerstand und somit der Spannungsabfall im Betrieb.

Das Gemisch aus Kohlenstoffaerogel und Schwefel wird nach dem Vermischen vermahlen. Das Vermahlen kann beispielsweise in einer Kugelmühle mit beispielsweise Zirkoniumdioxidkugeln für einen Zeitraum von 3 bis 7 Minuten, bei 500 bis 800 U/min, mit 2 bis 4 Wiederholungen gemahlen werden. Insbesondere kann das Vermahlen in einer Kugelmühle für einen Zeitraum von 5 Minuten bei 700 U/min mit 3 Wiederholungen erfolgen.

In einem weiteren Schritt werden die Mikroporen des Kohlenstoffaerogels durch Schwefel infiltriert. Hierzu kann insbesondere die vermahlene Mischung aus Schwefel und Kohlenstoffaerogel erhitzt werden, wobei eine Gasphaseninfiltration des Kohlenstoffaerogels stattfindet. Das Erhitzen kann beispielsweise unter vermindertem Druck, insbesondere unter Vakuum, stattfinden. Die Temperatur muss mindestens den Siedepunkt des Schwefels bei dem gewählten Druck erreichen. Insbesondere erfolgt die Gasphaseninfiltration unter Vakuum bei einer Temperatur von mindestens 400 °C und bis zu 800, bevorzugt mindestens 500 °C, ganz besonders bevorzugt bei einer Temperatur von 600 °C. Die Gasphaseninfiltration erfolgt innerhalb eines Zeitraums von mindestens 4 Stunden, insbesondere 5 Stunden. Insbesondere wird das vermahlene Gemisch aus Kohlenstoffaerogel und Schwefel unter Vakuum für 6 Stunden auf 600 °C erhitzt. Zur Durchführung der Gasphaseninfiltration kann das Schwefel-Aerogel-Gemisch beispielsweise in einer Glasampulle eingeschmolzen und/oder in einem (geschlossenen) Ofen erhitzt werden.

Nach der Gasphaseninfiltration kann der oberflächige, überschüssige Schwefel abgedampft werden. Hierzu wird insbesondere der Druck erhöht, wobei insbesondere ein Inertgas, wie beispielsweise Argon, zugegeben wird. Zum Abdampfen des Schwefels ist ebenfalls eine Erhitzung oder eine Druckverminderung des Gemischs möglich. Insbesondere wird das Gemisch unter einer Inertgas-Atmosphäre, vorzugsweise einer Argonatmosphäre, für 1,5 Stunden auf 330 °C erhitzt. Von dieser Vorgehensweise kann abgewichen werden, wobei jedoch sichergestellt werden muss, dass überschüssiger Schwefel entfernt wird. So kann überschüssiger Schwefel auch beispielsweise unter Einsatz eines Lösungsmittels entfernt werden. Geeignete Lösungsmittel umfassen bekannte Lösungsmittel für Schwefel, insbesondere Toluol.

Das so erhaltene mit Schwefel infiltrierte elastisch verformbare mikroporöse Kohlenstoffaerogel wird mit einer Bindersuspension versehen und auf einem Trägermaterial (Stromableiter) aufgebracht, um eine handhabbare Elektrode zu erhalten. Das Trägermaterial (Stromableiter) muss eine ausreichende elektrische Leitfähigkeit aufweisen.

Als Bindersuspension kann insbesondere eine wässrige Dispersion von Carboxymethylcellulose (CMC), Polyethylenglycol, Polyethylenoxid (PEO), Styrol-Butadien-Kautschuk (SBR), Chitosan, Guargummi (Guar Gum) oder deren Mischungen zum Einsatz kommen. Bevorzugt ist eine Dispersion von Carboxymethylcellulose und Poylethylenglycol in Wasser, wobei das Mischungsverhältnis der beiden Bestandteile in einem Bereich von 2:8 bis 4:6, insbesondere 3:7, liegt. Beispielsweise wird auch Polyvinylidendifluorid (PVdF), Polyacrylsäure gelöst in einem organischen Lösemittel, zum Beispiel Dimethylsulfoxid (DMSO) verwendet.

Das mit Schwefel infiltrierte Kohlenstoffaerogel wird mit der Bindersuspension mechanisch in einem Homogenisator vermischt. Das Massenverhältnis zwischen mit Schwefel infiltriertem Kohlenstoffaerogel und den festen Bestandteilen der Bindersuspension liegt vorzugsweise in einem Bereich von 95:5 bis 85:15. Besonders bevorzugt ist ein Massenverhältnis von 90:10. Das Mischen kann insbesondere in einem Taumelmischer für einen Zeitraum von 4 bis 6 Stunden, vorzugsweise 5 Stunden, erfolgen. Bei zu niedrigem Bindermittelgehalt wird keine homogene mechanisch stabile Schicht erzeugt, bei zu hohem Bindermittelgehalt steigt der elektrische Widerstand.

Die so erhaltene Suspension wird in einem letzten Schritt auf ein Trägermaterial (Stromableiter) aufgebracht. Die Auftragung kann beispielsweise mit einem Rakelverfahren, Suspensionssprühen, Spin-Coating, Ultraschallsprühen, Dipcoating oder dergleichen erfolgen. Als Trägermaterial (Stromableiter) kann vorzugsweise eine Aluminiumfolie, kohlenstoffbeschichtete Aluminiumfolie oder andere korrosionsbeständige Materialien wie Titan oder Nickel eingesetzt werden.

Eine erfindungsgemäße Elektrode, die nach dem erfindungsgemäßen Verfahren hergestellt wurde, kann als Elektrode in einem erfindungsgemäßen Akkumulator verwendet werden. Insbesondere kann die Elektrode in einem Lithium-Schwefel-Akkumulator eingesetzt werden.

In einer weiteren alternativen Ausführungsform wird die erfindungsgemäße Aufgabenstellung gelöst durch die Verwendung des elastisch verformbaren mikroporösen Kohlenstoffaerogels als Matrixmaterial für eine Elektrode.

Das erfindungsgemäß verwendete Kohlenstoffaerogel entspricht dem beschriebenen Kohlenstoffaerogel, das Teil der erfindungsgemäßen Schwefelelektrode ist.

In einer bevorzugten Ausführungsform wird das elastisch verformbare mikroporöse Kohlenstoffaerogel als Matrixmaterial für eine Schwefelelektrode verwendet.

Ausführungsbeispiele

*Herstellung eines Kohlenstoffaerogels*

Ansetzen der Lösung:

Zunächst wurden 300 ml destilliertes Wasser (W) in einem Becher eingewogen. Danach wurden 15 g Resorcin (R) zugegeben und die Lösung solange gerührt bis sich das Resorcin vollständig gelöst hatte (5 bis 7 Minuten). Danach wurden 22,1 g Formaldehyd (F) (37 Gew. %-Lösung mit 10 Gew.-% Methanol stabilisiert) dazugegeben und weitere 5 Min gerührt. Als nächstes kamen 0,29 g $Na_2CO_3$ (C) (Feststoff) in die Lösung. Nach weiteren 5 Min Rühren wurde der pH-Wert mit verdünnter 2N Salpetersäure auf einen pH-Wert zwischen 5,4 und 5,6 eingestellt. Die Lösung wurde weitere 60 Min bei Raumtemperatur gerührt. Zusammensetzung: Stoffmengenverhältnisse R/C 50; R/F 0,5; R/W 0,008

Gelation und Alterung

Die Lösung wurde in einen dicht verschließbaren Behälter gefüllt und in einem Ofen bei 80°C eine Woche lang gelieren gelassen.

Lösungsmittelaustausch/Waschen

Nach einer Woche wurde das erhaltene Gel aus dem Ofen genommen und auf Raumtemperatur abgekühlt. Das Gel wurde vorsichtig aus dem Behälter herausgenommen und in einen mit Aceton gefüllten Behälter gegeben. Es wurde für drei Tage gewaschen, wobei das Aceton zweimal am Tag ausgetauscht wurde. Nach drei Tagen Waschen wurde das gewaschene Gel getrocknet.

Trocknen

Die Trocknung fand in einem Autoklaven in überkritischem $CO_2$ statt. Die Prozessparameter waren: 83 bar, 50 °C, Massendurchfluss im Bereich von 10 bis 14 kg/h.

Nach der Trocknung wurde ein orangebraunes, flexibles Resorcin-Formaldehyd-Aerogel erhalten.

Karbonisierung

Das flexible Resorcin-Formaldehyd-Aerogel wurde in Argonatmosphäre bei 1000 °C, 1 Stunde lang karbonisiert und anschließend mit $CO_2$ geätzt.

*Infiltration von Schwefel in ein Kohlenstoff-Aerogel*

Zerkleinerung

440 mg des oben erhaltenen flexiblen Kohlenstoffaerogels und 560 mg elementarer Schwefel wurden vermischt und in einer Kugelmühle 5 Minuten lang bei 700 U/min mit 3 Wiederholungen gemahlen.

Gasphaseninfiltration des Schwefels in die Mikroporen

Das gemahlene Schwefel-Aerogel Gemisch wurde unter Vakuum in einer Glasampulle eingeschmolzen und in einem Ofen bei 600 °C für 6 h erhitzt.

Abdampfen des überschüssigen Schwefels

Das Schwefel-Aerogel Gemisch wurde unter Argonatmosphäre in einem Reaktor mit Kühlfalle für 1,5 h auf 330 °C erhitzt.

*Elektrodenherstellung*

Bindersuspension

26,7 mg Carboxymethylcellulose und 62,2 mg Polyethylenglycol wurden gemischt und in 4938 mg Wasser dispergiert.

Suspension

Der Bindersuspension wurden 800 mg des mit Schwefel infiltrierten Aerogels beigefügt und für 5 h in einem Taumelmischer vermischt.

Beschichtung

Die Suspension wurde mithilfe einer Rakel mit einem Spaltmaß von 200 $\mu$m auf eine Aluminiumfolie aufgetragen und für 6 h bei 60 °C getrocknet.

*Batteriezellaufbau*

Elektroden und Separator

Die Aerogel-Schwefel Elektrode wurde gegen reines Lithium in einem Halbzellenaufbau getestet. Als Separator wurde ein handelsüblicher Celgard® 2500 Polypropylenseparator der Firma Celgard verwendet.

Elektrolyt

Handelsüblicher 1M Lithium bis(trifluoromethanesulfonyl)imide gelöst in Ethylenglycoldimethylether und 1,3-Dioxolan im Volumenverhältnis 1:1.

*Charakterisierung*

Die Probe wurde unter einer Ar/O$_2$-Atmosphäre in einem Al$_2$O$_3$ Messtiegel mit 5 K/min auf 1200 °C erhitzt.

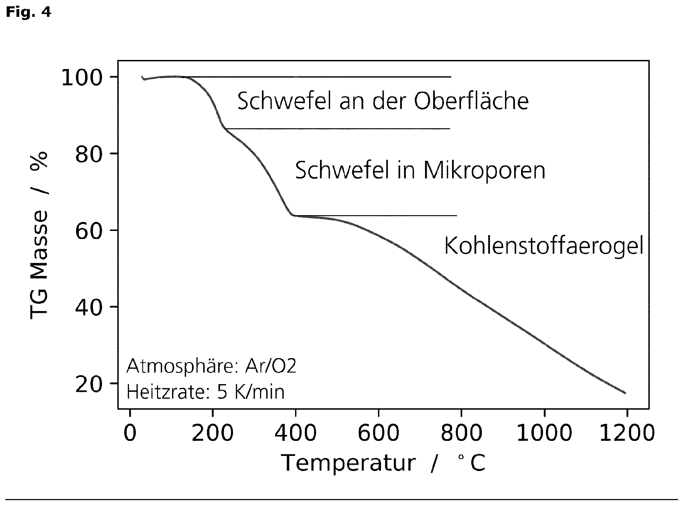

In Fig. 4 ist sind die Ergebnisse der thermogravimetrischen Analyse des Schwefel-Aerogels nach der Gasphasenfiltration dargestellt. Die thermogravimetrische Messung zeigt, dass das Kohlenstoffaerogel die Möglichkeit besitzt, den Schwefel in dessen Mikroporen zu binden. Dies führt dazu, dass dieser Teil des Schwefels im Gegensatz zu dem Schwefel bei einer höheren Temperatur verdampft, welcher sich an der Oberfläche befindet.

*Die elektrochemische Charakterisierung der Batteriezelle*

Hierbei wurde die Batteriezelle bei einer Umgebungstemperatur von 25 °C und einer C-Rate von 0,3 C 100 Mal entladen und geladen. Die Batteriezelle wurde bis zu einer Ladeschlussspannung von 3,3 V geladen und bis zu einer Entladeschlussspannung von 1,0 V entladen.

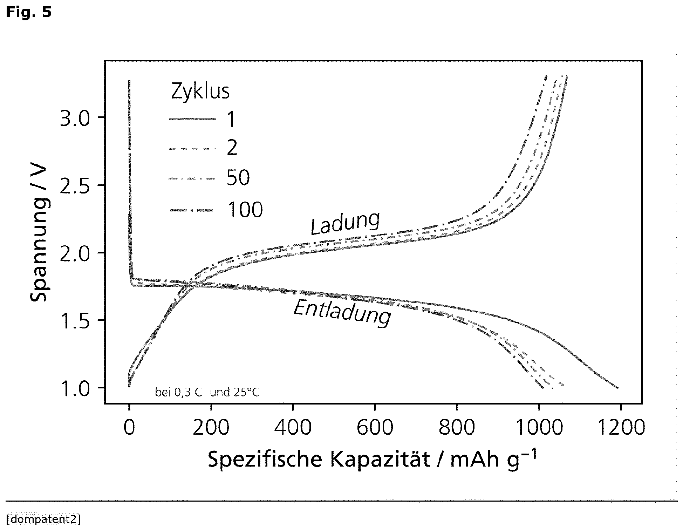

In Fig. 5 ist der Spannungsverlauf der Zelle während der Entladung und Ladung über die spezifische Kapazität dargestellt. Hier ist ein Spannungsplateau bei 1,7 V während der Entladung zu beobachten. Normalerweise zeigt eine Lithium-Schwefelbatterie zwei Spannungsplateaus auf, was auf die einzelnen Reduktionsstufen der Schwefelketten zurückzuführen ist.

Dies könnte ein Anzeichen dafür sein, dass die Kettenlängen nicht über $S_4$ hinausgehen. Ursache könnte die Porengeometrie der Mikroporen des Kohlenstoffaerogels sein, welche die Entstehung von längeren Schwefelketten unterbindet. Erst diese längeren Ketten wären im Elektrolyt löslich und es würde zum Polysulfidshuttle kommen.

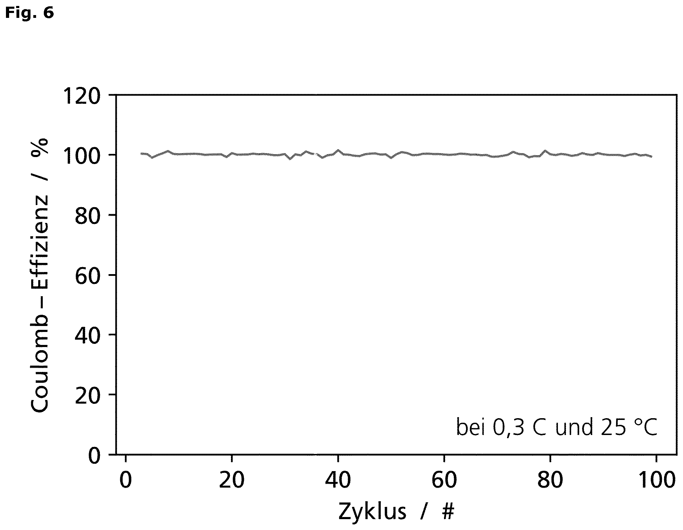

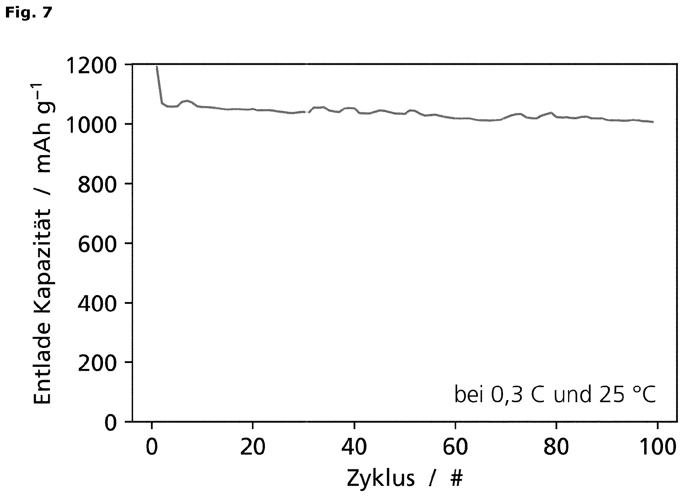

Fig. 6 zeigt den Verlauf der Coulomb-Effizienz über die Zyklen. Fig. 7 zeigt den Verlauf der Entladekapazität über die Zyklen. Ein Ausbleiben des Polysulfidshuttles zeigt sich durch eine hohe Coulomb-Effizienz, da der übliche Ladungsverlust während der Entladung und Ladung stark reduziert wird. Dies ist bei den Messergebnissen der Zyklenmessungen zu sehen. Die Coulomb-Effizienz liegt während der Zyklenmessung konstant bei knapp 100%. Zudem zeigt die Batteriezelle eine konstante Entladekapazität von über 1000 mAh g$^{-1}$ Schwefel für die ersten 100 Zyklen. Die Degradation der Kapazität zwischen dem 5. und 100. Zyklus beträgt lediglich 4,9%.

## Patentansprüche

1. Elektrode für einen Lithium-Schwefel-Akkumulator, umfassend Schwefel und ein poröses Kohlenstoffmaterial, wobei die Poren des porösen Kohlenstoffmaterials mit dem Schwefel infiltriert sind, **dadurch gekennzeichnet, dass** das poröse Kohlenstoffmaterial ein elastisch verformbares mikroporöses Kohlenstoffaerogel umfasst, wobei das Kohlenstoffaerogel eine elastische Verformbarkeit von mindestens 10% aufweist, sodass das Kohlenstoffaerogel nach einaxialer Kompression um 10% nach Entfernen der Kraft vollständig in den Ausgangszustand zurückkehrt und wobei das Kohlenstoffaerogel eine mikroporöse Struktur aufweist, wobei mindestens 50% der Gesamtoberfläche durch Poren mit einem Durchmesser von 2 nm oder weniger gebildet wird, wobei die Porengröße und die einaxiale Kompression nach Methoden laut Beschreibung bestimmt werden.

2. Elektrode gemäß Anspruch 1, **dadurch gekennzeichnet, dass** Schwefel in Form von elementarem Schwefel und/oder in Form einer Schwefelverbindung, insbesondere in Form von Lithiumsulfid (Li$_2$S), vorliegt.

3. Elektrode gemäß Anspruch 1 oder 2, **dadurch gekennzeichnet, dass** das Gesamtporenvolumen des Kohlenstoffaerogels zu mindestens 65 Vol.-% mit Schwefel infiltriert ist.

4. Elektrode gemäß einem der Ansprüche 1 bis 3, **dadurch gekennzeichnet, dass** der Schwefelgehalt der Elektrode mindestens 30 Gew.-% beträgt.

5. Akkumulator, umfassend eine Elektrode gemäß einem der Ansprüche 1 bis 4, einen Separator, einen Elektrolyten sowie eine weitere Elektrode, insbesondere eine Lithiumelektrode.

6. Verfahren zur Herstellung einer Elektrode gemäß einem der Ansprüche 1 bis 4, umfassend die Schritte:

   i) Bereitstellen eines elastisch verformbaren mikroporösen Kohlenstoffaerogels und elementaren Schwefels,
   ii) Vermischen und Vermahlen des Kohlenstoffaerogels und des Schwefels,
   iii) Infiltrieren der Mikroporen des Kohlenstoffaerogels durch Schwefel, insbesondere mittels Gasphaseninfiltration, wobei das Schwefel-Aerogel-Gemisch unter Vakuum erhitzt wird,
   iv) Vermischen des Schwefel-Aerogels mit einer Bindersuspension und
   v) Aufbringen der erhaltenen Suspension auf ein Trägermaterial (Stromableiter),

   **dadurch gekennzeichnet, dass** das elastisch verformbare mikroporöse Kohlenstoffaerogel erhältlich ist, indem ein elastisch verformbares mikroporöses organisches Aerogel, durch Pyrolyse karbonisiert wird,
   wobei zur Pyrolyse ein elastisch verformbares mikroporöses organisches Aerogel auf Basis von Resorcin-Formaldehyd eingesetzt wird, das erhältlich ist nach einem Verfahren, umfassend die Schritte:

   i) Ansetzen einer Lösung enthaltend destilliertes Wasser, Resorcin, Formaldehyd und eine Base, insbesondere Natriumcarbonat, wobei Formaldehyd in Bezug auf Resorcin im stöchiometrischen Überschuss vorliegt und das Stoffmengenverhältnis von Resorcin und Wasser in einem Bereich von 0,006 bis 0,01 liegt,
   ii) Einstellen des pH-Wertes der Lösung auf einen Bereich von 5,3 bis 5,6, iia) Rühren der Lösung bei Raumtemperatur für 60 Minuten,

# EP 3 626 678 B1

iii) Gelation bei einer Temperatur von 70 bis 90 °C,

iv) Abkühlen des Gels auf Raumtemperatur und Waschen mit einem aprotischen, organischen Lösungsmittel und

v) Trocknen des Gels bei einer gegenüber Raumtemperatur erhöhten Temperatur.

**7.** Verwendung eines elastisch verformbaren mikroporösen Kohlenstoffaerogels als Matrixmaterial für eine Elektrode gemäß einem der Ansprüche 1-4, wobei das Kohlenstoffaerogel eine elastische Verformbarkeit von mindestens 10% aufweist, sodass das Kohlenstoffaerogel nach einaxialer Kompression um 10% nach Entfernen der Kraft vollständig in den Ausgangszustand zurückkehrt und wobei das Kohlenstoffaerogel eine mikroporöse Struktur aufweist, wobei mindestens 50% der Gesamtoberfläche durch Poren mit einem Durchmesser von 2 nm oder weniger gebildet wird.

## Claims

**1.** An electrode for a lithium-sulfur secondary battery, comprising sulfur and a porous carbon material, wherein the pores of said porous carbon material are infiltrated by the sulfur, **characterized in that** said porous carbon material comprises an elastic deformable microporous carbon aerogel, wherein said carbon aerogel has an elastic deformability of at least 10%, so that the carbon aerogel fully returns to its original state after removal of the force after uniaxial compression of 10%, and wherein said carbon aerogel has a microporous structure, where at least 50% of the total surface area is formed by pores with a diameter of 2 nm or less, wherein the pore size and the uniaxial compression are determined by methods according to the description.

**2.** The electrode according to claim 1, **characterized in that** the sulfur is in the form of elemental sulfur and/or in the form of a sulfur compound, especially in the form of lithium sulfide ($Li_2S$).

**3.** The electrode according to claim 1 or 2, **characterized in that** the total pore volume of the carbon aerogel is infiltrated with sulfur to at least 65% by volume.

**4.** The electrode according to any of claims 1 to 3, **characterized in that** the sulfur content of said electrode is at least 30% by weight.

**5.** An accumulator, comprising an electrode according to any of claims 1 to 4, a separator, an electrolyte, and another electrode, especially a lithium electrode.

**6.** A process for preparing an electrode according to any of claims 1 to 4, comprising the steps:

i) providing an elastic deformable microporous carbon aerogel and elemental sulfur,

ii) mixing and grinding said carbon aerogel and sulfur,

iii) infiltrating the micropores of said carbon aerogel by sulfur, especially via vapor infiltration, wherein said sulfur-aerogel mixture is heated in a vacuum,

iv) mixing the sulfur-aerogel with a binder suspension, and

v) applying the obtained suspension to a support material (current collector),

**characterized in that** said elastic deformable microporous carbon aerogel is obtainable by carbonizing an elastic deformable microporous organic aerogel by pyrolysis,

wherein for said pyrolysis an elastic deformable microporous organic aerogel is deployed based on resorcinol-formaldehyde obtainable by a method comprising the following steps:

i) preparing a solution containing distilled water, resorcinol, formaldehyde and a base, especially sodium carbonate, wherein formaldehyde is present in a stoichiometric excess over resorcinol, and the molar ratio of resorcinol to water is within a range of from 0.006 to 0.01,

ii) adjusting the pH of the solution in a range of from 5.3 to 5.6,

iia) stirring the solution at room temperature for 60 minutes,

iii) gelling at a temperature of from 70 to 90°C,

iv) cooling the gel to room temperature, and washing it with an aprotic organic solvent, and

v) drying the gel at a temperature higher than room temperature.

**7.** Use of an elastic deformable microporous carbon aerogel as a matrix material for an electrode according to any of claims 1-4, wherein said carbon aerogel has an elastic deformability of at least 10%, so that the carbon aerogel fully

**10**

returns to its original state after removal of the force after uniaxial compression of 10%, and wherein said carbon aerogel has a microporous structure, where at least 50% of the total surface area is formed by pores with a diameter of 2 nm or less.

**Revendications**

1. Électrode pour un accumulateur lithium-soufre, comprenant du soufre et un matériau de carbone poreux, dans laquelle les pores du matériau de carbone poreux sont infiltrés de soufre, **caractérisée en ce que** ledit matériau de carbone poreux comprend un aérogel de carbone microporeux élastiquement déformable, dans laquelle ledit aérogel de carbone présente une déformabilité élastique d'au moins 10 %, de sorte que l'aérogel de carbone retrouve complètement son état initial après une compression uniaxiale de 10 % après suppression de la force, et dans laquelle ledit aérogel de carbone présente une structure microporeuse, dans laquelle au moins 50 % de la surface totale est constituée de pores d'un diamètre de 2 nm ou moins, dans laquelle la taille des pores et la compression uniaxiale sont déterminées par des méthodes selon la description.

2. Électrode selon la revendication 1, **caractérisée en ce que** le soufre est présent sous forme de soufre élémentaire et/ou sous forme de composé soufré, notamment sous forme de sulfure de lithium ($Li_2S$).

3. Électrode selon la revendication 1 ou 2, **caractérisée en ce que** le volume poreux total de l'aérogel de carbone est infiltré de soufre à au moins 65 % en volume.

4. Électrode selon l'une quelconque des revendications 1 à 3, **caractérisée en ce que** la teneur en soufre de l'électrode est d'au moins 30 % en poids.

5. Accumulateur, comprenant une électrode selon l'une des revendications 1 à 4, un séparateur, un électrolyte et une autre électrode, notamment une électrode au lithium.

6. Procédé pour fabriquer une électrode selon l'une des revendications 1 à 4, comprenant les étapes consistant à :

   i) fournir un aérogel de carbone microporeux élastiquement déformable et du soufre élémentaire,
   ii) mélanger et broyer l'aérogel de carbone et le soufre,
   iii) infiltrer les micropores de l'aérogel de carbone par du soufre, notamment par infiltration en phase vapeur, dans laquelle le mélange soufre-aérogel est chauffé sous vide,
   iv) mélanger l'aérogel soufré avec une suspension de liant, et
   v) appliquer la suspension obtenue à un matériau de support (collecteur de courant),
   **caractérisée en ce que** ledit aérogel de carbone microporeux élastiquement déformable peut être obtenu par carbonisation d'un aérogel organique microporeux élastiquement déformable par pyrolyse,
   dans laquelle un aérogel organique microporeux élastiquement déformable à base de résorcinol-formaldéhyde est utilisé pour la pyrolyse, lequel peut être obtenu par un procédé comprenant les étapes consistant à :

   i) préparer une solution contenant de l'eau distillée, du résorcinol, du formaldéhyde et une base, notamment du carbonate de sodium, où le formaldéhyde est présent en excès stœchiométrique par rapport au résorcinol, et le rapport stœchiométrique du résorcinol et de l'eau se situe dans la plage de 0,006 à 0,01,
   ii) ajuster le pH de la solution à une plage de 5,3 à 5,6,
   iia) agiter la solution à température ambiante pendant 60 minutes,
   iii) la faire gélifier à une température de 70 à 90 °C,
   iv) refroidir le gel à température ambiante, et le laver avec un solvant aprotique organique, et
   v) secher le gel à une température élevée par rapport à la température ambiante.

7. Utilisation d'un aérogel de carbone microporeux élastiquement déformable comme matériau de matrice pour une électrode selon l'une des revendications 1 à 4, dans laquelle ledit aérogel de carbone présente une déformabilité élastique d'au moins 10 %, de sorte que l'aérogel de carbone retrouve complètement son état initial après une compression uniaxiale de 10 % après suppression de la force, et dans laquelle ledit aérogel de carbone présente une structure microporeuse, dans laquelle au moins 50 % de la surface totale est constituée de pores d'un diamètre de 2 nm ou moins.

**Fig. 1**

**Fig. 2**

**Fig. 3**

**Fig. 4**

**Fig. 5**

[dompatent2]

**Fig. 6**

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3043896 A
- DE 19938822 A1
- EP 1610404 B1
- EP 2250692 B1
- FR 2872347 A
- US 20180183067 A1
- DE 102012218548 A1

**In der Beschreibung aufgeführte Nicht-Patentliteratur**

- **PEKALA RW** ; **ALVISO CT** ; **LEMAY JD**. Organic aerogels: microstructural dependence of mechanical properties in compression. *J Non-Cryst Solids*, 1990, vol. 125, 67-75
- **MATTHIAS THOMMES**. *IUPAC Technical Report*
- **KATSUMI KANEKO** ; **ALEXANDER V. NEIMARK** ; **JAMES P. OLIVIER** ; **FRANCISCO RODRIGUEZ-REINOSO** ; **JEAN ROUQUEROL** ; **KENNETH S.W.** Sing Physisorption of gases, with special reference to the evaluation of surface area and pore size distribution (IUPAC Technical Report). *Pure Appl. Chem*, 2015